(19) Europäisches Patentamt
European Patent Office
Office européen des brevets

(11) EP 3 079 470 B1

(12) **EUROPEAN PATENT SPECIFICATION**

(45) Date of publication and mention of the grant of the patent:
**22.01.2020 Bulletin 2020/04**

(21) Application number: **14870335.8**

(22) Date of filing: **09.12.2014**

(51) Int Cl.:
*A01N 57/20* (2006.01)
*A01N 39/04* (2006.01)
*A01N 33/12* (2006.01)
*A01P 13/02* (2006.01)

(86) International application number:
**PCT/US2014/069232**

(87) International publication number:
**WO 2015/089015 (18.06.2015 Gazette 2015/24)**

(54) **SYNERGISTIC HERBICIDAL WEED CONTROL FROM COMBINATIONS OF 2,4-D-CHOLINE AND GLUFOSINATE**

SYNERGISTISCHE HERBIZIDE UNKRAUTBEKÄMPFUNG DURCH KOMBINATIONEN VON 2,4-D-CHOLIN UND GLUFOSINAT

DÉSHERBAGE HERBICIDE SYNERGIQUE À PARTIR DE COMBINAISONS DE 2,4-D-CHOLINE ET GLUFOSINATE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.12.2013 US 201361914195 P**
**10.12.2013 US 201361914177 P**

(43) Date of publication of application:
**19.10.2016 Bulletin 2016/42**

(73) Proprietor: **Dow AgroSciences LLC**
**Indianapolis, IN 46268 (US)**

(72) Inventors:
- **MANN, Richard K.**
  **Indianapolis, IN 46268 (US)**
- **PETERSON, Mark**
  **Indianapolis, IN 46268 (US)**
- **WRIGHT, Terry R.**
  **Indianapolis, IN 46268 (US)**
- **MCMASTER, Steve**
  **Indianapolis, IN 46268 (US)**
- **SORRIBAS AMELA, Monica**
  **Indianapolis, IN 46268 (US)**

(74) Representative: **f & e patent**
**Fleischer, Engels & Partner mbB, Patentanwälte**
**Braunsberger Feld 29**
**51429 Bergisch Gladbach (DE)**

(56) References cited:
**WO-A1-2011/133482**
**WO-A1-2014/059125**
**US-A1- 2013 252 812**

- **Rand Michael Merchant: "CONTROL OF GLYPHOSATE-RESISTANT PALMER AMARANTH IN DHT COTTON AND PEANUT RESPONSE TO 2,4-D", University of Georgia US , 1 May 2013 (2013-05-01), XP055349948, US Retrieved from the Internet: URL:https://getd.libs.uga.edu/pdfs/merchant_rand_m_201305_ms.pdf [retrieved on 2017-02-28]**
- **Rand M Merchant ET AL: "WEED SCIENCE Weed Response to 2,4-D, 2,4-DB, and Dicamba Applied Alone or with Glufosinate", The Journal of Cotton Science SC, 1 September 2013 (2013-09-01), pages 212-218, XP055370936, Retrieved from the Internet: URL:https://www.cotton.org/journal/2013-17/3/loader.cfm?csModule=security/getfile&pageid=147460 [retrieved on 2017-05-09]**
- **Si Bayer: "Liberty280 SL Herbicide", , 1 April 2013 (2013-04-01), pages 1-20, XP055349965, Retrieved from the Internet: URL:https://s3-us-west-1.amazonaws.com/www.agrian.com/pdfs/Liberty_280_SL_Herbicide_Label1l.pdf [retrieved on 2017-02-28]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 079 470 B1

- **MERCHANT.: 'Control of glyphosate-resistant Palmer amaranth in DHT cotton and peanut response to 2,4-D.' vol. 1-89, May 2013, XP055349948 Retrieved from the Internet: <URL:https://getd.libs.uga.edu/pdfs/merchant_rand_m_201305_ms.pdf>**
- **Rand M. Merchant ET AL: "Controlling Glyphosate-Resistant Palmer Amaranth (Amaranthus palmeri) in Cotton with Resistance to Glyphosate, 2,4-D, and Glufosinate", Weed Technology, vol. 28, no. 02, 1 June 2014 (2014-06-01), pages 291-297, XP055524058, US ISSN: 0890-037X, DOI: 10.1614/WT-D-13-00104.1**

## Description

Cross Reference to Related Applications

This application claims the benefit of U.S. Provisional Patent Application Serial Nos. 61/914,177 and 61/914,195 filed December 10, 2013.

Background

The protection of crops from weeds and other vegetation which inhibit crop growth is a recurring problem in agriculture. To help combat this problem, a variety of chemicals and chemical formulations effective in the control of such unwanted vegetation have been synthesized and evaluated. Different classes of chemical herbicides have been disclosed in the literature and a large number are in commercial use. However, there remains a need for improved compositions and methods of use thereof that are effective in controlling undesirable vegetation.

Summary

Compositions for controlling undesirable vegetation containing a mixture containing synergistic, herbicidally effective amounts of:

(a) a choline salt of 2,4-dichlorophenoxyacetic acid (2,4-D-choline)

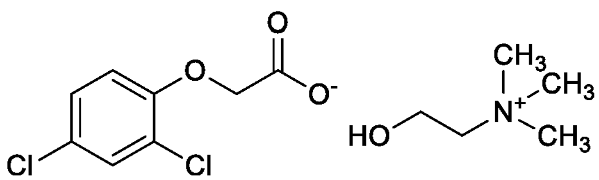

and

(b) an ammonium salt of 2-amino-4-(hydroxymethylphosphinyl)butanoic acid (glufosinate)

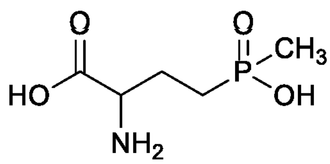

are described herein. The compositions may also contain one or more agriculturally acceptable adjuvants and/or carriers.

Additionally, methods of controlling undesirable vegetation and improving crop tolerance in 2,4-D- and glufosinate-tolerant soybeans, corn, or cotton including contacting the undesirable vegetation and the 2,4-D- and glufosinate-tolerant soybeans, corn, or cotton or the locus thereof, including but not limited to foliage, soil or water, with the composition containing a mixture containing synergistic, herbicidally effective amounts of 2,4-D-choline and an ammonium salt of glufosinate are described herein. The undesirable vegetation may include herbicide resistant or tolerant weeds and the undesirable vegetation may be located in non-crop, perennial crop, fruiting crop, or plantation crop areas.

In another embodiment, methods of controlling undesirable vegetation in non-crop, perennial crop, fruiting crop, or plantation crop areas including contacting the undesirable vegetation or the locus thereof, including but not limited to foliage, soil or water, with a composition containing a mixture containing synergistic, herbicidally effective amounts of 2,4-D-choline and an ammonium salt of glufosinate are described herein.

Detailed Description

## I. Definitions

As used herein, 2,4-D-choline is the choline salt of 2,4-dichlorophenoxyacetic acid or 2-hydroxy-*N*,*N*,*N*-trimethylethanaminium 2-(2,4-dichlorophenoxy)acetate, which has the following structure:

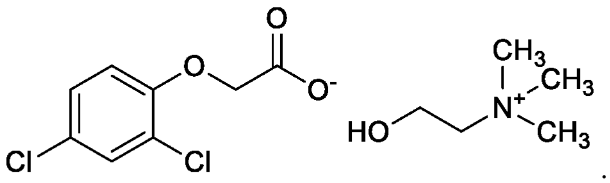

Exemplary uses of 2,4-D-choline include controlling annual and perennial broad-leaved weeds, including glyphosate-resistant broad-leaved weeds. 2,4-D-choline can be used in crops that have been made tolerant to 2,4-D, particularly in 2,4-D-tolerant soybeans, corn, and cotton. 2,4-D-choline is generally, but is not required to be, applied post-emergent. 2,4-D-choline can also be used for weed control in non-crop and perennial cropping systems.

As used herein, glufosinate is 2-amino-4-(hydroxymethylphosphinyl)butanoic acid. The salt of glufosinate is glufosinate-ammonium, which is also known as the ammonium salt of 2-amino-4-(hydroxymethylphosphinyl)butanoic acid or ammonium (3-amino-3-carboxypropyl)(methyl)phosphinate, and which has the following structure:

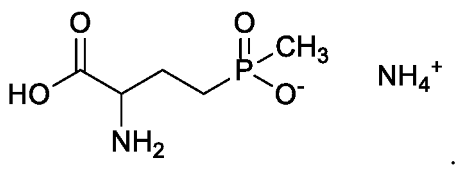

Glufosinate-ammonium is registered for controlling a wide variety of broad-leaved weeds and grasses particularly in glufosinate-tolerant crops like canola, corn, soybean, rice, cotton, and sugar beet. As used herein, glufosinate salt or salt of glufosinate generally refers to the reaction product of glufosinate with a moiety that can act as a base. Typically, the reaction is an acid-base reaction.

The term herbicide, as used herein, means an active ingredient that kills, controls or otherwise adversely modifies the growth of plants. As used herein, a herbicidally effective or vegetation controlling amount is an amount of active ingredient that causes a "herbicidal effect," *i.e.,* an adversely modifying effect and includes deviations from natural development, killing, regulation, desiccation, retardation.

As used herein, "plants" and "vegetation" include, but are not limited to, germinant seeds, emerging seedlings, plants emerging from vegetative propagules, and established vegetation.

As used herein, immature vegetation refers to small vegetative plants prior to reproductive stage, and mature vegetation refers to vegetative plants during and after reproductive stage.

As used herein, 2,4-D-tolerant soybeans refer to soybeans that are genetically modified to be tolerant to 2,4-D. Examples of 2,4-D tolerant soybeans include soybeans containing the *aad-12* gene which confers tolerance to 2,4-D (U.S. Patent 8,283,522 B2). As used herein, 2,4-D-tolerant corn refers to corn that is genetically modified to be tolerant to 2,4-D. Examples of 2,4-D tolerant corn include corn containing the *aad-1* gene which confers tolerance to 2,4-D (U.S. Patent 7,838,733 B2). As used herein, 2,4-D-tolerant cotton refers to cotton that is genetically modified to be tolerant to 2,4-D. Examples of 2,4-D tolerant cotton include cotton containing the *aad-12* gene which confers tolerance to 2,4-D. However, tolerance in each of these crops by the *aad-1* or *aad-12* genes or with alternative genes providing additional or alternative tolerance to transgenic crops [*e.g., aad-13* (U.S. Patent 8,278,505 B2), *tfdA* (U.S. Patent 6,153,401 A), or *24dt02* (CN103060279)] is considered to be included within the scope of the 2,4-D- and glufosinate-tolerant soybeans, corn, or cotton described herein.

As used herein, glufosinate tolerance refers to soybeans, corn, or cotton that is genetically modified to be tolerant to glufosinate. Glufosinate tolerance can be provided, for example, by *the pat* gene (US 5,587,903 A) as shown herein; however, glufosinate tolerance could also be conferred within the scope of the 2,4-D- and glufosinate-tolerant soybeans, corn, or cotton described herein by other genes providing transgenic crop tolerance to glufosinate [*e.g., bar* (U.S. Patent 5,561,236 A) and *dsm2* (WO2008070845)].

R. Merchant et al describe the control of glufosinate tolerant cotton with a combination of 2,4-D and glufosinate in The Journal of Cotton Science 2013, 17:212, and WO2011/133482 discloses the combination of 2,4-D with glufosinate-ammonium. US2013/252812 teaches that the choline salt of 2,4-D reduces eye irritancy, and suggests the combination with glufosinate. However, none of these documents teach the combination of the choline salt of 2,4-D and glufosinate-ammonium.

## II. Compositions

### A. Synergistic combinations

Provided herein are herbicidal compositions containing a mixture containing synergistic, herbicidally effective amounts of:

(a) the choline salt of 2,4-dichlorophenoxyacetic acid (2,4-D-choline)

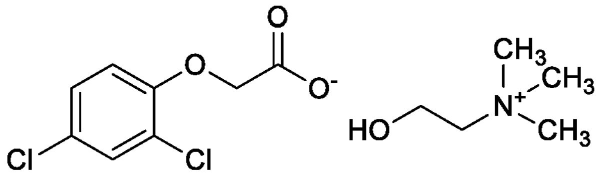

and (b) an ammonium salt of 2-amino-4-(hydroxymethylphosphinyl)butanoic acid (glufosinate)

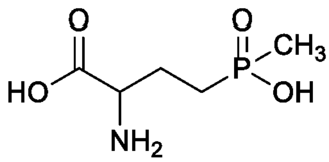

Agriculturally acceptable salts of glufosinate are anticipated to control undesirable vegetation in combination with 2,4-D-choline and a salt of glyphosate. An example of such an agriculturally acceptable salt of glufosinate includes glufosinate-ammonium.

Furthermore, the combination of 2,4-D-choline and the salt of glufosinate exhibit synergism, i.e., the herbicidal active ingredients are more effective in combination than when applied individually. Synergism has been defined as "an interaction of two or more factors such that the effect when combined is greater than the predicted effect based on the response of each factor applied separately." Shaner, D. L., Ed. Herbicide Handbook, 10th ed. Lawrence: Weed Science Society of America, 2014. In certain embodiments, the compositions exhibit synergy as determined by Colby's equation. Colby, S. R. Calculation of the synergistic and antagonistic response of herbicide combinations. Weeds 1967, 15, 20-22.

Additionally, in some embodiments, the combination of 2,4-D-choline and the salt of glufosinate improves crop tolerance in 2,4-D- and glufosinate-tolerant soybeans, corn and cotton.

Herbicidal activity is exhibited by the compounds when they are applied pre- and post-emergence directly to the plant or to the locus of the plant at any stage of growth. The effect observed depends upon the plant species to be controlled, the stage of growth of the plant, the application parameters of dilution and spray drop size, the particle size of solid components, the environmental conditions at the time of use, the specific compound employed, the specific adjuvants and carriers employed, the soil type, the amount of chemical applied, and the combinations thereof. These and other factors can be adjusted to promote non-selective or selective herbicidal action. In some embodiments, the compositions described herein are applied as a post-emergence application, to relatively immature and mature undesirable vegetation to achieve the maximum control of weeds.

In some embodiments, 2,4-D-choline and the salt of glufosinate are used in combination with other herbicides that are selective for the soybeans, corn or cotton being treated and which complement the spectrum of weeds controlled by these compounds at the application rate employed. In some embodiments, the compositions described herein and other complementary herbicides are applied at the same time, either as a combination formulation or as a tank mix, at the same time or as sequential applications.

The present compositions can be applied to weeds or their locus thereof, including but not limited to foliage, soil or water, by the use of conventional ground or aerial dusters, sprayers, and granule applicators and by other conventional means known to those skilled in the art.

In some embodiments, the concentration of the active ingredients in the compositions described herein is from about 0.0005 to 99 percent by weight. In some embodiments, the concentration is from about 0.006 to 90 percent by

weight. In compositions designed to be employed as concentrates, the active ingredients, in certain embodiments, are present in a concentration from about 0.01 to 98 weight percent, and in certain embodiments about 0.5 to 90 weight percent. Such compositions are, in certain embodiments, diluted with an inert carrier, such as water, before application. The diluted compositions usually applied to weeds or the locus of weeds contain, in certain embodiments, about 0.003 to 98 weight percent active ingredient and in certain embodiments contain about 0.007 to 25.0 weight percent active ingredient.

In the compositions and methods described herein, 2,4-D-choline is used in combination with an ammonium salt of glufosinate. With regard to the compositions, the weight ratio of the compound of 2,4-D-choline to the salt of glufosinate is within the range from about 1:1 to about 4:1, and in some embodiments from about 1.5:1 to about 3:1, from about 1:1 to about 1.5:1, and from about 1:1 to about 2.5:1..

With respect to the methods, in certain embodiments, the methods comprise contacting the undesirable vegetation with a composition described herein, *e.g.*, sequentially or simultaneously. In some embodiments, the composition is applied at an application rate from about 300 grams acid equivalent per hectare (g ae/ha) to about 11,200 g ae/ha based on the total amount of active ingredients in the composition. In certain embodiments, the composition is applied at an application rate from about 600 g ae/ha to about 7,810 g ae/ha based on the total amount of active ingredients in the composition. In certain embodiments, the composition is applied at an application rate from about 1,120 g ae/ha to about 2,800 g ae/ha based on the total amount of active ingredients in the composition. In certain embodiments, the composition is applied at an application rate from about 1,300 g ae/ha to about 1,700 g ai/ha based on the total amount of active ingredients in the composition.

The components of the mixtures described herein can be applied either separately, sequentially, tank mixed or as part of a mixture or multipart herbicidal system. In some embodiments, both components may be formulated together (e.g., in the same formulation) or separately (e.g., in separate formulations) and applied simultaneously. In another embodiment, one or more components may be formulated separately and the formulations applied sequentially. The time period between applications can vary, for example 1, 2, 4, 6, 8, 10, or 12 hours or longer or 1, 2, 3, 4, 5, 6, or 7 days or longer.

In one embodiment, the compositions exhibit synergy against a variety of weed types. In one embodiment, the combination of 2,4-D-choline and the salt of glufosinate in a ratio of about 1:1 to about 4:1 exhibits greater than about 5, 6, 7, 8, 9, 10, 11, 13, 15, 18, 20, 21, 22, 23, 24, or 25% control compared to the Colby predicted value at 6-28 days after application (DAA).

In another embodiment, the compositions exhibit synergy in reducing crop injury. In one embodiment, the combination of 2,4-D-choline and the salt of glufosinate in a ratio of about 1:1 to about 4:1 exhibits reductions of 5, 6, 7, 8, 9, 10, 11, 13, 15, 18, 20, 21, 22, 23, 24, 25, 30 or 35% crop injury compared to the Colby predicted value at 2-15 days after application (DAA).

In another embodiment, the compositions exhibit synergy as defined by the efficacy values defined above against a variety of weed types or crops, including but not limited to, *Amaranthus palmeri* (Palmer pigweed, AMAPA), *Conyza canadensis* (horseweed, ERICA), *Salsola tragus* L. (Russian thistle, SASKR), and *Sesbania exaltata* (hemp sesbania, SEBEX).

In another embodiment, the compositions can be used to control glyphosate-tolerant soybeans (GLXMA) and other crops that have single site tolerance to, including but not limited to, glyphosate, acetolactate synthase (ALS) and other herbicide modes-of-action.

### B. Other actives

The mixtures described herein can be applied in conjunction with one or more other herbicides to control a wider variety of undesirable vegetation. When used in conjunction with other herbicides, the composition can be formulated with the other herbicide or herbicides, tank mixed with the other herbicide or herbicides or applied sequentially with the other herbicide or herbicides. Some of the herbicides that can be employed in conjunction with the compositions and methods described herein include, but are not limited to, acid, salt, and ester forms of the following herbicides: 4-CPA, 4-CPB, 4-CPP, 3,4-DA, 2,4-DB, 3,4-DB, 3,4-DP, 2,3,6-TBA, 2,4,5-T, 2,4,5-TB, acetochlor, acifluorfen, aclonifen, acrolein, alachlor, allidochlor, alloxydim, allyl alcohol, alorac, ametridione, ametryn, amibuzin, amicarbazone, amidosulfuron, aminocyclopyrachlor, aminopyralid, amiprofos-methyl, amitrole, ammonium sulfamate, anilofos, anisuron, asulam, atraton, atrazine, azafenidin, azimsulfuron, aziprotryne, barban, BCPC, beflubutamid, benazolin, bencarbazone, benfluralin, benfuresate, bensulfuron-methyl, bensulide, bentazon, benthiocarb, benzadox, benzfendizone, benzipram, benzobicyclon, benzofenap, benzofluor, benzoylprop, benzthiazuron, bicyclopyrone, bifenox, bilanafos, bispyribac-sodium, borax, bromacil, bromobonil, bromobutide, bromofenoxim, bromoxynil, brompyrazon, butachlor, butafenacil, butamifos, butenachlor, buthidazole, buthiuron, butralin, butroxydim, buturon, butylate, cacodylic acid, cafenstrole, calcium chlorate, calcium cyanamide, cambendichlor, carbasulam, carbetamide, carboxazole chlorprocarb, carfentrazone (*e.g.*, carfentrazone-ethyl), CDEA, CEPC, chlomethoxyfen, chloramben, chloranocryl, chlorazifop, chlorazine, chlorbromuron, chlorbufam, chloreturon, chlorfenac, chlorfenprop, chlorflurazole, chlorflurenol, chloridazon, chlorimuron, chlornitrofen, chloropon, chlorotoluron, chloroxuron, chloroxynil, chlorpropham, chlorsulfuron, chlorthal, chlorthiamid, cinidon (*e.g.*, cinidon-ethyl), cinmethylin, cinosulfuron, cisanilide, clethodim, cliodinate, clodinafop-propargyl, clofop, clomazone, clomeprop, cloprop, cloproxydim, clopyralid, cloransulam, CMA, copper sulfate, CPMF, CPPC, credazine, cresol, cumyluron, cyanatryn, cyanazine, cycloate, cyclopyrimorate, cyclosulfamuron, cycloxydim, cycluron, cyhalofop (*e.g.*, cyhalofop-butyl), cyperquat, cyprazine, cyprazole, cypromid, daimuron, dalapon, dazomet, delachlor, desmedipham, desmetryn, di-allate, dicamba, dichlobenil, dichloralurea, dichlormate, dichlorprop, dichlorprop-P, diclofop-methyl, diclosulam, diethamquat, diethatyl, difenopenten, difenoxuron, difenzoquat, diflufenican, diflufenzopyr, dimefuron, dimepiperate, dimethachlor, dimethametryn, dimethenamid, dimethenamid-P, dimexano, dimidazon, dinitramine, dinofenate, dinoprop, dinosam, dinoseb, dinoterb, diphenamid, dipropetryn, diquat, disul, dithiopyr, diuron, DMPA, DNOC, DSMA, EBEP, eglinazine, endothal, epronaz, EPTC, erbon, esprocarb, ethbenzamide, ethalfluralin, ethametsulfuron, ethidimuron, ethiolate, ethobenzamid, etobenzamid, ethofumesate, ethoxyfen, ethoxysulfuron, etinofen, etnipromid, etobenzanid, EXD, fenasulam, fenoprop, fenoxaprop, fenoxaprop-P (*e.g.*, fenoxaprop-P-ethyl), fenoxaprop-P-ethyl + isoxadifen-ethyl, fenoxasulfone, fenquinotrione, fenteracol, fenthiaprop, fentrazamide, fenuron, ferrous sulfate, flamprop, flamprop-M, flazasulfuron, florasulam, fluazifop, fluazifop-P (*e.g.*, fluazifop-P-butyl), fluazolate, flucarbazone, flucetosulfuron, fluchloralin, flufenacet, flufenican, flufenpyr (*e.g.*, flufenpyr-ethyl), flumetsulam, flumezin, flumiclorac (*e.g.*, flumiclorac-pentyl), flumioxazin, flumipropyn, fluometuron, fluorodifen, fluoroglycofen, fluoromidine, fluoronitrofen, fluothiuron, flupoxam, flupropacil, flupropanate, flupyrsulfuron, fluridone, flurochloridone, fluroxypyr, flurtamone, fluthiacet, fomesafen, foramsulfuron, fosamine, fumiclorac, furyloxyfen, glyphosate, halauxifen, halosafen, halosulfuron (*e.g.*, halosulfuron-methyl), haloxydine, haloxyfop-methyl, haloxyfop-P (*e.g.*, haloxyfop-P-methyl), hexachloroacetone, hexaflurate, hexazinone, imazamox, imazapic, imazapyr, imazaquin, imazethapyr, imazosulfuron, indanofan, indaziflam, iodobonil, iodomethane, iodosulfuron, iodosulfuron-ethyl-sodium, iofensulfuron, ioxynil, ipazine, ipfencarbazone, iprymidam, isocarbamid, isocil, isomethiozin, isonoruron, isopolinate, isopropalin, isoproturon, isouron, isoxaben, isoxachlortole, isoxaflutole, isoxapyrifop, karbutilate, ketospiradox, lactofen, lenacil, linuron, MAA, MAMA, MCPA esters and amines, MCPA-thioethyl, MCPB, mecoprop, mecoprop-P, medinoterb, mefenacet, mefluidide, mesoprazine, mesosulfuron, mesotrione, metam, metamifop, metamitron, metazachlor, metazosulfuron, metflurazon, methabenzthiazuron, methalpropalin, methazole, methiobencarb, methiozolin, methiuron, methometon, methoprotryne, methyl bromide, methyl isothiocyanate, methyldymron, metobenzuron, metobromuron, metolachlor, metosulam, metoxuron, metribuzin, metsulfuron, metsulfuron-methyl, molinate, monalide, monisouron, monochloroacetic acid, monolinuron, monuron, morfamquat, MSMA, naproanilide, napropamide, napropamide-M, naptalam, neburon, nicosulfuron, nipyraclofen, nitralin, nitrofen, nitrofluorfen, norflurazon, noruron, OCH, orbencarb, *ortho*-dichlorobenzene, orthosulfamuron, oryzalin, oxadiargyl, oxadiazon, oxapyrazon, oxasulfuron, oxaziclomefone, oxyfluorfen, parafluron, paraquat, pebulate, pelargonic acid, pendimethalin, penoxsulam, pentachlorophenol, pentanochlor, pentoxazone, perfluidone, pethoxamid, phenisopham, phenmedipham, phenmedipham (*e.g.*, phenmedipham-ethyl), phenobenzuron, phenylmercury acetate, picloram, picolinafen, pinoxaden, piperophos, potassium arsenite, potassium azide, potassium cyanate, pretilachlor, primisulfuron (*e.g.*, primisulfuron-methyl), procyazine, prodiamine, profluazol, profluralin, profoxydim, proglinazine, prohexadione-calcium, prometon, prometryn, propachlor, propanil, propaquizafop, propazine, propham, propisochlor, propoxycarbazone, propyrisulfuron, propyzamide, prosulfalin, prosulfocarb, prosulfuron, proxan, prynachlor, pydanon, pyraclonil, pyraflufen (*e.g.*, pyraflufen-ethyl), pyrasulfotole, pyrazogyl, pyrazolynate, pyrazosulfuron-ethyl, pyrazoxyfen, pyribenzoxim, pyributicarb, pyriclor, pyridafol, pyridate, pyriftalid, pyriminobac, pyrimisulfan, pyrithiobac-sodium, pyroxasulfone, pyroxsulam, quinclorac, quinmerac, quinoclamine, quinonamid, quizalofop, quizalofop-P (*e.g.*, quizalofop-P-ethyl), rhodethanil, rimsulfuron, saflufenacil, S-metolachlor, sebuthylazine, secbumeton, sethoxydim, siduron, simazine, simeton, simetryn, SMA, sodium arsenite, sodium azide, sodium chlorate, sulcotrione, sulfallate, sulfentrazone, sulfometuron, sulfosate, sulfosulfuron, sulfuric acid, sulglycapin, swep, TCA, tebutam, tebuthiuron, tefuryltrione, tembotrione, tepraloxydim, terbacil, terbucarb, terbuchlor, terbumeton, terbuthylazine, terbutryn, tetrafluron, thenylchlor, thiazafluron, thiazopyr, thidiazimin, thidiazuron, thiencarbazone-methyl, thifensulfuron, thifensulfuron-methyl, thiobencarb, tiocarbazil, tioclorim, topramezone, tralkoxydim, triafamone, triallate, triasulfuron, triaziflam, tribenuron, tribenuron (*e.g.,* tribenuron-methyl), tricamba, triclopyr (*e.g.,* triclopyr choline salt), triclopyr, tridiphane, trietazine, trifloxysulfuron, trifluralin, triflusulfuron, trifop, trifopsime, trihydroxytriazine, trimeturon, tripropindan, tritac, tritosulfuron, vernolate, xylachlor, benzyl 4-amino-3-chloro-5-fluoro-6-(4-chloro-2-fluoro-3-methoxyphenyl)pyridine-2-carboxylate and salts, choline salts, esters, optically active isomers and mixtures thereof.

**C. Safeners**

In some embodiments, the compositions described herein are employed in combination with one or more herbicide safeners, such as AD-67 (MON 4660), benoxacor, benthiocarb, brassinolide, cloquintocet (mexyl), cyometrinil, daimuron, dichlormid, dicyclonon, dimepiperate, disulfoton, fenchlorazole-ethyl, fenclorim, flurazole, fluxofenim, furilazole, harpin proteins, isoxadifen-ethyl, jiecaowan, jiecaoxi, mefenpyr-diethyl, mephenate, naphthalic anhydride (NA), oxabetrinil, R29148 and *N*-phenyl-sulfonylbenzoic acid amides, to enhance their selectivity. In some embodiments, the

safeners are employed in rice, cereal, corn, or maize settings. In some embodiments, the safener is cloquintocet or an ester or salt thereof. In certain embodiments, cloquintocet is utilized to antagonize harmful effects of the compositions on rice and cereals. In some embodiments, the safener is cloquintocet (mexyl).

**D. Adjuvants/Carriers**

In some embodiments, compositions provided herein further comprise at least one agriculturally acceptable adjuvant or carrier. Suitable adjuvants or carriers should not be phytotoxic to valuable crops, particularly at the concentrations employed in applying the compositions for selective weed control in the presence of crops, and should not react chemically with herbicidal components or other composition ingredients. Such mixtures can be designed for application directly to weeds or their locus or can be concentrates or formulations that are normally diluted with additional carriers and adjuvants before application. They can be solids, such as, for example, dusts, granules, water-dispersible granules, microcapsules or wettable powders, or liquids, such as, for example, emulsifiable concentrates, solutions, emulsions or suspensions. They can also be provided as a pre-mix or tank mixed.

Suitable agricultural adjuvants and carriers include, but are not limited to, crop oil concentrate; nonylphenol ethoxylate; benzylcocoalkyldimethyl quaternary ammonium salt; blend of petroleum hydrocarbon, alkyl esters, organic acid, and anionic surfactant; $C_9$-$C_{11}$ alkylpolyglycoside; phosphated alcohol ethoxylate; natural primary alcohol ($C_{12}$-$C_{16}$) ethoxylate; di-*sec*-butylphenol EO-PO block copolymer; polysiloxane-methyl cap; nonylphenol ethoxylate + urea ammonium nitrate; emulsified methylated seed oil; tridecyl alcohol (synthetic) ethoxylate (8EO); tallow amine ethoxylate (15 EO); PEG(400) dioleate-99.

Liquid carriers that can be employed include water and organic solvents. The organic solvents include, but are not limited to, petroleum fractions or hydrocarbons such as mineral oil, aromatic solvents, paraffinic oils, and the like; vegetable oils such as soybean oil, rapeseed oil, olive oil, castor oil, sunflower seed oil, coconut oil, corn oil, cottonseed oil, linseed oil, palm oil, peanut oil, safflower oil, sesame oil, tung oil and the like; esters of the above vegetable oils; esters of monoalcohols or dihydric, trihydric, or other lower polyalcohols (4-6 hydroxy containing), such as 2-ethyl hexyl stearate, *n*-butyl oleate, isopropyl myristate, propylene glycol dioleate, di-octyl succinate, di-butyl adipate, di-octyl phthalate and the like; esters of mono, di and polycarboxylic acids and the like. Specific organic solvents include, but are not limited to toluene, xylene, petroleum naphtha, crop oil, acetone, methyl ethyl ketone, cyclohexanone, trichloroethylene, perchloroethylene, ethyl acetate, amyl acetate, butyl acetate, propylene glycol monomethyl ether and diethylene glycol monomethyl ether, methyl alcohol, ethyl alcohol, isopropyl alcohol, amyl alcohol, ethylene glycol, propylene glycol, glycerine, *N*-methyl-2-pyrrolidinone, *N*,*N*-dimethyl alkylamides, dimethyl sulfoxide, liquid fertilizers and the like. In certain embodiments, water is the carrier for the dilution of concentrates.

Suitable solid carriers include but are not limited to talc, pyrophyllite clay, silica, attapulgus clay, kaolin clay, kieselguhr, chalk, diatomaceous earth, lime, calcium carbonate, bentonite clay, Fuller's earth, cottonseed hulls, wheat flour, soybean flour, pumice, wood flour, walnut shell flour, lignin, cellulose, and the like.

In some embodiments, the compositions described herein further comprise one or more surface-active agents. In some embodiments, such surface-active agents are employed in both solid and liquid compositions, and in certain embodiments those designed to be diluted with carrier before application. The surface-active agents can be anionic, cationic or nonionic in character and can be employed as emulsifying agents, wetting agents, suspending agents, or for other purposes. Surfactants which may also be used in the present formulations are described, *inter alia,* in McCutcheon's Detergents and Emulsifiers Annual, MC Publishing Corporation: Ridgewood, NJ, 1998 and in Encyclopedia of Surfactants, Vol. I-III, Chemical Publishing Company: New York, 1980-81. Surface-active agents include, but are not limited to salts of alkyl sulfates, such as diethanolammonium lauryl sulfate; alkylarylsulfonate salts, such as calcium dodecylbenzenesulfonate; alkylphenol-alkylene oxide addition products, such as nonylphenol-Cis ethoxylate; alcohol-alkylene oxide addition products, such as tridecyl alcohol-$C_{16}$ ethoxylate; soaps, such as sodium stearate; alkylnaphthalene-sulfonate salts, such as sodium dibutylnaphthalenesulfonate; dialkyl esters of sulfosuccinate salts, such as sodium di(2-ethylhexyl) sulfosuccinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; salts of mono and dialkyl phosphate esters; vegetable or seed oils such as soybean oil, rapeseed/canola oil, olive oil, castor oil, sunflower seed oil, coconut oil, corn oil, cottonseed oil, linseed oil, palm oil, peanut oil, safflower oil, sesame oil, tung oil and the like; and esters of the above vegetable oils, and in certain embodiments, methyl esters.

In some embodiments, these materials, such as vegetable or seed oils and their esters, can be used interchangeably as an agricultural adjuvant, as a liquid carrier or as a surface active agent.

Other exemplary additives for use in the compositions provided herein include but are not limited to compatibilizing agents, antifoam agents, sequestering agents, neutralizing agents and buffers, corrosion inhibitors, dyes, odorants, spreading agents, penetration aids, sticking agents, dispersing agents, thickening agents, freezing point depressants, antimicrobial agents, and the like. The compositions may also contain other compatible components, for example, other herbicides, plant growth regulants, fungicides, insecticides, and the like and can be formulated with liquid fertilizers

or solid, particulate fertilizer carriers such as ammonium nitrate, urea and the like.

**III. Methods of use**

Methods of controlling undesirable vegetation in 2,4-D- and glufosinate-tolerant soybeans, corn, or cotton, comprising contacting the vegetation or the locus thereof, including but not limited to foliage, soil or water, with a composition containing a mixture containing synergistic herbicidally effective amounts of (a) 2,4-D-choline and (b) an ammonium salt of glufosinate are described herein. The methods employ the compositions described herein.

In another embodiment, methods of controlling undesirable vegetation in non-crop, perennial crop, fruiting crop, or plantation crop areas, comprising contacting undesirable vegetation or the locus thereof, including but not limited to foliage, soil or water, with a composition containing a mixture containing synergistic herbicidally effective amounts of (a) 2,4-D-choline and (b) an ammonium salt of glufosinate are described herein. The methods employ the compositions described herein.

Agriculturally acceptable salts of glufosinate are anticipated to control undesirable vegetation in combination with 2,4-D-choline and a salt of glyphosate. An example of such an agriculturally acceptable salt of glufosinate includes glufosinate-ammonium.

The compositions and methods provided herein are utilized to control undesirable vegetation. Undesirable vegetation includes, but is not limited to, undesirable vegetation that occurs in 2,4-D- and glufosinate-tolerant soybeans, corn, or cotton; non-crop areas, including but not limited to pastures, grasslands, rangelands, fallowland, fencerows, parking areas, tank farms, storage areas, rights-of-way, utility areas, turf, forestry, aquatics, industrial vegetation management (IVM) and fallow-bed prior to planting crops; perennial crops where the application contacts the undesirable vegetation but does not contact the crop foliage, such as tree and vine orchards, including but not limited to citrus, grapes, almond, apple, apricot, avocado, beechnut, Brazil nut, butternut, cashew, cherry, chestnut, chinquapin, crab apple, date, feijoa, fig, filbert, hickory nut, kiwi, lemon, lime, loquat, macadamia nut, mandarins, mayhaws, nectarine, olives, oranges, peach, pear, pecan, persimmon, pistachio, plum, pomegranates, pome fruit, prune, stone fruit, tree nuts, quince and walnut; fruiting crops (including, but not limited to, blueberries, guava, papaya, strawberries, taro, blackberries and raspberries) and plantation crops (including, but not limited to, coffee, cacao, rubber and palm oil).

The compositions and methods provided herein are utilized to control undesirable vegetation. Undesirable vegetation includes, but is not limited to, undesirable vegetation that occurs in annual crops such as 2,4-D- and glufosinate-tolerant cereal crops, including but not limited to rice, wheat, barley, oats, rye and sorghum.

In some embodiments, the methods provided herein are utilized to control undesirable vegetation found in row crops, tree and vine crops, perennial crops and non-crop areas. In certain embodiments, the undesirable vegetation is *Alopecurus myosuroides* Huds. (blackgrass, ALOMY), *Amaranthus palmeri* S. Wats. (Palmer amaranth, AMAPA), *Avena fatua* L. (wild oat, AVEFA), *Brachiaria decumbens* Stapf. or *Urochloa decumbens* (Stapf) R.D. Webster (Surinam grass, BRADC), *Brachiaria brizantha* (Hochst. ex A. Rich.) Stapf. or *Urochloa brizantha* (Hochst. ex A. Rich.) R.D. (beard grass, BRABR), *Brachiaria platyphylla* (Groseb.) Nash or *Urochloa platyphylla (Nash) R.D. Webster* (broadleaf signalgrass, BRAPP), *Brachiaria plantaginea* (Link) Hitchc. or *Urochloa plantaginea* (Link) R.D. Webster (alexandergrass, BRAPL), *Cenchrus echinatus* L. (southern sandbur, CENEC), *Digitaria horizontalis* Willd. (Jamaican crabgrass, DIGHO), *Digitaria insularis* (L.) Mez ex Ekman (sourgrass, TRCIN), *Digitaria sanguinalis* (L.) Scop. (large crabgrass, DIGSA), *Echinochloa crus-galli* (L.) P. Beauv. (barnyardgrass, ECHCG), *Echinochloa colonum* (L.) Link (junglerice, ECHCO), *Eleusine indica* (L.) Gaertn. (goosegrass, ELEIN), *Lolium multiflorum* Lam. (Italian ryegrass, LOLMU), *Panicum dichotomiflorum* Michx. (fall panicum, PANDI), *Panicum miliaceum* L. (wild-proso millet, PANMI), *Sesbania exaltata* (Raf.) Cory/Rydb. Ex Hill (hemp sesbania, SEBEX), *Setaria faberi* Herrm. (giant foxtail, SETFA), *Setaria viridis* (L.) Beauv. (green foxtail, SETVI), *Sorghum halepense* (L.) Pers. (Johnsongrass, SORHA), *Sorghum bicolor* (L.) Moench ssp. *Arundinaceum* (shattercane, SORVU), *Cyperus esculentus* L. (yellow nutsedge, CYPES), *Cyperus rotundus* L. (purple nutsedge, CYPRO), *Abutilon theophrasti* Medik. (velvetleaf, ABUTH), *Amaranthus* species (pigweeds and amaranths, AMASS), *Ambrosia artemisiifolia* L. (common ragweed, AMBEL), *Ambrosia psilostachya* DC. (western ragweed, AMBPS), *Ambrosia trifida* L. (giant ragweed, AMBTR), *Anoda cristata* (L.) Schlecht. (spurred anoda, ANVCR), *Asclepias syriaca* L. (common milkweed, ASCSY), *Bidens pilosa* L. (hairy beggarticks, BIDPI), *Borreria* species (BOISS), *Borreria alata* (Aubl.) DC. or *Spermacoce alata* Aubl. or *Spermacoce latifolia* (broadleaf buttonweed, BOILF), *Chenopodium album* L. (common lambsquarters, CHEAL), *Cirsium arvense* (L.) Scop. (Canada thistle, CIRAR), *Commelina benghalensis* L. (tropical spiderwort, COMBE), *Datura stramonium* L. (jimsonweed, DATST), *Daucus carota* L. (wild carrot, DAUCA), *Euphorbia heterophylla* L. (wild poinsettia, EPHHL), *Euphorbia hirta* L. or *Chamaesyce hirta* (L.) Millsp. (garden spurge, EPHHI), *Euphorbia dentata* Michx. (toothed spurge, EPHDE), *Erigeron bonariensis* L. or *Conyza bonariensis* (L.) Cronq. (hairy fleabane, ERIBO), *Erigeron canadensis* L. or *Conyza canadensis* (L.) Cronq. (horseweed, ERICA), *Conyza sumatrensis* (Retz.) E. H. Walker (tall fleabane, ERIFL), *Helianthus annuus* L. (common sunflower, HELAN), *Jacquemontia tamnifolia* (L.) Griseb. (smallflower morningglory, IAQTA), *Ipomoea hederacea* (L.) Jacq. (ivyleaf morningglory, IPOHE), *Ipomoea lacunosa* L. (white morningglory, IPOLA), *Lactuca serriola* L./Torn. (prickly lettuce, LACSE), *Portulaca oleracea* L. (common purslane,

POROL), *Richardia* species (pusley, RCHSS), *Salsola tragus* L. (Russian thistle, SASKR), *Sida* species (sida, SIDSS), *Sida spinosa* L. (prickly sida, SIDSP), *Sinapis arvensis* L. (wild mustard, SINAR), *Solanum ptychanthum* Dunal (eastern black nightshade, SOLPT), *Tridax procumbens* L. (coat buttons, TRQPR), or *Xanthium strumarium* L. (common cocklebur, XANST).

In some embodiments, the methods provided herein are utilized to control undesirable vegetation in range and pasture areas. In certain embodiments, the undesirable vegetation is *Amaranthus palmeri* S. Wats. (Palmer amaranth, AMAPA), *Ambrosia artemisiifolia* L. (common ragweed, AMBEL), *Cassia obtusifolia* (sickle pod, CASOB), *Centaurea maculosa* auct. non Lam. (spotted knapweed, CENMA), *Cirsium arvense* (L.) Scop. (Canada thistle, CIRAR), *Convolvulus arvensis* L. (field bindweed, CONAR), *Conyza canadensis* (L.) Cronq. (horseweed, ERICA), *Euphorbia esula* L. (leafy spurge, EPHES), *Lactuca serriola* L./Torn. (prickly lettuce, LACSE), *Plantago lanceolata* L. (buckhorn plantain, PLALA), *Rumex obtusifolius* L. (broadleaf dock, RUMOB), *Salsola tragus* L. (Russian thistle, SASKR), *Sesbania exaltata* (Raf.) Cory/Rydb. Ex Hill (hemp sesbania, SEBEX), *Sida spinosa* L. (prickly sida, SIDSP), *Sinapis arvensis* L. (wild mustard, SINAR), *Sonchus arvensis* L. (perennial sowthistle, SONAR), *Solidago* species (goldenrod, SOOSS), *Taraxacum officinale* G.H. Weber ex Wiggers (dandelion, TAROF), *Trifolium repens* L. (white clover, TRFRE), or *Urtica dioica* L. (common nettle, URTDI).

In some embodiments, the combination of 2,4-D-choline and a salt of glufosinate is used to synergistically control *Amaranthus palmeri* S. Wats. (Palmer amaranth, AMAPA), *Conyza canadensis* (L.) Cronq. (horseweed, ERICA), *Salsola tragus* L. (Russian thistle, SASKR) and *Sesbania exaltata* (Raf.) Cory/Rydb. Ex Hill (hemp sesbania, SEBEX).

2,4-D-choline and a salt of glufosinate may be used to control herbicide resistant or tolerant weeds. The methods employing the combination of 2,4-D-choline and a salt of glufosinate and the compositions described herein may also be employed to control herbicide resistant or tolerant weeds. Exemplary resistant or tolerant weeds include, but are not limited to, biotypes resistant or tolerant to acetolactate synthase (ALS) or acetohydroxy acid synthase (AHAS) inhibitors (*e.g.*, imidazolinones, sulfonylureas, pyrimidinylthiobenzoates, dimethoxy-pyrimidines, triazolopyrimidine sulfonamides, sulfonylaminocarbonyltriazolinones), photosystem II inhibitors (*e.g.*, phenylcarbamates, pyridazinones, triazines, triazinones, uracils, amides, ureas, benzothiadiazinones, nitriles, phenylpyridazines), acetyl CoA carboxylase (ACCase) inhibitors (*e.g.*, aryloxyphenoxypropionates, cyclohexanediones, phenylpyrazolines), synthetic auxins (*e.g.*, benzoic acids, phenoxycarboxylic acids, pyridine carboxylic acids, quinoline carboxylic acids), auxin transport inhibitors (*e.g.,* phthalamates, semicarbazones), photosystem I inhibitors (*e.g.,* bipyridyliums), 5-enolpyruvylshikimate-3-phosphate (EPSP) synthase inhibitors (*e.g.*, glyphosate), glutamine synthetase inhibitors (*e.g.*, glufosinate, bialafos), microtubule assembly inhibitors (*e.g.*, benzamides, benzoic acids, dinitroanilines, phosphoramidates, pyridines), mitosis inhibitors (*e.g.*, carbamates), very long chain fatty acid (VLCFA) inhibitors (*e.g.*, acetamides, chloroacetamides, oxyacetamides, tetrazolinones), fatty acid and lipid synthesis inhibitors (*e.g.*, phosphorodithioates, thiocarbamates, benzofuranes, chlorocarbonic acids), protoporphyrinogen oxidase (PPO) inhibitors *(e.g.,* diphenylethers, *N*-phenylphthalimides, oxadiazoles, oxazolidinediones, phenylpyrazoles, pyrimidinediones, thiadiazoles, triazolinones), carotenoid biosynthesis inhibitors (*e.g.*, clomazone, amitrole, aclonifen), phytoene desaturase (PDS) inhibitors (*e.g.*, amides, anilidex, furanones, phenoxybutan-amides, pyridiazinones, pyridines), 4-hydroxyphenyl-pyruvate-dioxygenase (HPPD) inhibitors (*e.g.*, callistemones, isoxazoles, pyrazoles, triketones), cellulose biosynthesis inhibitors (*e.g.*, nitriles, benzamides, quinclorac, triazolocarboxamides), herbicides with multiple modes-of-action such as quinclorac, and unclassified herbicides such as arylaminopropionic acids, difenzoquat, endothall, and organoarsenicals. Exemplary resistant or tolerant weeds include, but are not limited to, biotypes with resistance or tolerance to single or multiple herbicides, biotypes with resistance or tolerance to single or multiple chemical classes, biotypes with resistance or tolerance to single or multiple herbicide modes-of-action, and biotypes with single or multiple resistance or tolerance mechanisms (*e.g.*, target site resistance or metabolic resistance).

The compositions and methods described herein are used to control undesirable vegetation in 2,4-D- and glufosinate-tolerant soybeans, corn, or cotton which may also be combined with traits providing glyphosate tolerance (*e.g.,* resistant plant or bacterial *EPSPS, GOX*), dicamba-tolerance (*e.g., DMO),* pyridyloxy auxin-tolerance (*e.g., aad-12, aad-13*)*,* auxin-tolerance, auxin transport inhibitor-tolerance, acetyl CoA carboxylase (ACCase) inhibitor-herbicide tolerance [*e.g.*, aryloxyphenoxypropionate, cyclohexanedione, and phenylpyrazoline chemistries (*e.g.,*various *ACCase* genes and *aad-1* gene)], acetolactate synthase (ALS)-inhibiting herbicide tolerance (e.g., imidazolinone, sulfonylurea, triazolopyrimidine sulfonanilide, pyrimidinylthiobenzoates, and other chemistries = *AHAS, Csr1, SurA*)*,* 4-hydroxyphenyl-pyruvate dioxygenase (HPPD) inhibitor-tolerance, phytoene desaturase (PDS) inhibitor-tolerance (*e.g., pds, CYP1A1, CYP2B6, CYP2C19*)*,* carotenoid biosynthesis inhibitor-tolerance, protoporphyrinogen oxidase (PPO) inhibitor-tolerance, cellulose biosynthesis inhibitor-tolerance (*e.g., ixr2-1, CYP1A1*)*,* mitosis inhibitor-tolerance, microtubule inhibitor-tolerance, very long chain fatty acid inhibitor-tolerance (*e.g., CYP1A1, CYP2B6, CYP2C19),* fatty acid and lipid biosynthesis inhibitor-tolerance (*e.g., CTP141*)*,* photosystem I inhibitor-tolerance (*e.g.,* SOD), photosystem II inhibitor (triazine, nitrile, and phenylurea chemistries) tolerance (*e.g., psbA, CYP1A1, CYP2B6, CYP2C19, and Bxn),* (such as, but not limited to, soybean, corn, cotton, canola/oilseed rape, rice, cereals, sorghum, sunflower, sugar beet, sugarcane, and turf), for example, in conjunction with glyphosate, EPSP synthase inhibitors, glutamine synthase inhibitors, dicamba, phenoxy

auxins, pyridyloxy auxins, synthetic auxins, auxin transport inhibitors, aryloxyphenoxypropionates, cyclohexanediones, phenylpyrazolines, ACCase inhibitors, imidazolinones, sulfonylureas, pyrimidinylthiobenzoates, dimethoxypyrimidines, triazolopyrimidine sulfonamides, sulfonylaminocarbonyltriazolinones, ALS or acetohydroxy acid synthase (AHAS) inhibitors, HPPD inhibitors, PDS inhibitors, carotenoid biosynthesis inhibitors, PPO inhibitors, cellulose biosynthesis inhibitors, mitosis inhibitors, microtubule inhibitors, very long chain fatty acid inhibitors, fatty acid and lipid biosynthesis inhibitors, photosystem I inhibitors, photosystem II inhibitors, triazines, and bromoxynil. The compositions and methods may be used in controlling undesirable vegetation in soybeans, corn, or cotton possessing single and multiple or stacked traits conferring tolerance to single or multiple chemistries and/or inhibitors of multiple modes of action.

## Examples

### Example 1. Evaluation of Herbicidal Activity of Mixtures under Field Conditions

#### Methodology

These trials were conducted under field conditions in multiple states in the United States, including but not limited to Arkansas, Illinois, Indiana, Minnesota, Mississippi, Nebraska, Ohio, Oklahoma, Texas, South Carolina and South Dakota. Trials were established as RCB (randomized complete block) design, with typically 3-4 replicates per treatment, and plot sizes varying from 6-15 feet (ft) wide by 10-25 ft long. Treatments were applied with small plot backpack sprayers, using pressurized air or carbon dioxide ($CO_2$) as propellant. Pressure varied from 22-50 pounds per square inch (psi), with spray tips typically of a Flat Fan type applying water diluent at 15 gallons per acre (GPA). Boom sizes varied from 6.3-10 ft in width. Treatments were applied to soybean, cotton, corn or fallow crop land. Weed sizes varied, but all treatments were applied as post-emergence treatments to weeds from 2 leaf to 2 tiller growth stages varying from 2 to 15 inches in height. The weed spectrum included, but was not limited to, *Amaranthus palmeri* S. Wats. (Palmer amaranth, AMAPA), *Conyza canadensis* (L.) Cronq. (horseweed, ERICA), *Salsola tragus* L. (Russian thistle, SASKR) and *Sesbania exaltata* (hemp sesbania, SEBEX).

2,4-D- and glufosinate-tolerant soybeans, corn and cotton and optionally a glyphosate trait in a breeding (*CP4 EPSPS)* or a molecular stack (*2mEPSPS)* were used in all tolerance trials.

#### Evaluation

Commercially available product of glufosinate-ammonium (Ignite® 280SL (Soluble Concentrate), containing 256 grams acid equivalent per liter (g ae/L)) was utilized in all trials, either applied alone or tank-mixed with ammonium sulfate liquid (2.5% volume per volume (vol/vol)). The 2,4-D-choline salt formulation was a 456 g ae/L SL. If ammonium sulfate was mixed with glufosinate-ammonium, then ammonium sulfate was also mixed with the 2,4-D-choline salt + glufosinate-ammonium mixture. All treatments were mixed in water at appropriate formulated product rates to achieve the desired rates as shown based on a unit area of application (hectare). Treatments were rated at 2 to 28 days after application (DAA) as compared to the untreated control plants. The trial sites had naturally occurring populations of weeds. The treated plots and control plots were rated blind at various intervals after application. Ratings were based on a Percent (%) Visual basis, where 0 corresponds to no visual effect as seen as exemplified by weed control or crop injury and 100 corresponds to complete kill of the target weeds or complete crop injury.

Data were collected for all trials and analyzed using various statistical methods.

Colby's equation was used to determine the herbicidal effects expected from the mixtures (Colby, S. R. Calculation of the synergistic and antagonistic response of herbicide combinations. Weeds 1967, 15, 20-22). A t-test (alpha=0.05) between Colby predictions and observed combinations was used to test for significant differences indicating synergy or antagonism using replicate data. The results presented in Tables 1-5 were significant according to the described criteria.

The following equation was used to calculate the expected activity of mixtures containing two active ingredients, A and B:

$$\text{Expected} = A + B - (A \times B/100)$$

A = observed efficacy of active ingredient A at the same concentration as used in the mixture;

B = observed efficacy of active ingredient B at the same concentration as used in the mixture.

The results are summarized in Tables 1-7.

Table 1. Synergistic Herbicidal Weed Control (%Visual Control) from Combinations of 2,4-D-Choline Salt + Glufosinate-ammonium in Multiple Field Trials at 7 to 28DAA.

| | | 2,4-D-Choline salt | | Glufosinate-ammonium | | Combination | |
|---|---|---|---|---|---|---|---|
| Weed Bayer Code | Evaluation Interval | g ae/ha | Mean % weed control | g ae/ha | Mean % weed control | Measured mean % weed control | Colby predicted mean % weed control |
| AMAPA | 7DAA | 800 | 47.5 | 542 | 80.0 | 95.5 | 89.6 |
| AMAPA | 10DAA | 1065 | 55.0 | 542 | 54.3 | 90.8 | 79.5 |
| AMAPA | 13DAA | 1065 | 45.0 | 542 | 75.0 | 93.8 | 86.3 |
| AMAPA | 16DAA | 800 | 62.5 | 542 | 65.0 | 95.3 | 86.9 |
| AMAPA | 21DAA | 1065 | 38.8 | 542 | 51.3 | 92.5 | 70.3 |
| AMAPA | 22DAA | 800 | 48.8 | 542 | 56.3 | 91.5 | 77.3 |
| ERICA | 7DAA | 1065 | 40.0 | 542 | 75.0 | 90.0 | 85.0 |
| ERICA | 13DAA | 1065 | 40.0 | 542 | 85.0 | 95.0 | 91.0 |
| ERICA | 22DAA | 1065 | 40.0 | 542 | 80.0 | 98.0 | 88.0 |
| ERICA | 28DAA | 1065 | 30.0 | 542 | 98.0 | 100.0 | 98.6 |
| SASKR | 14DAA | 1065 | 67.5 | 542 | 12.5 | 91.3 | 71.4 |
| SASKR | 21DAA | 1065 | 65.0 | 542 | 6.3 | 91.3 | 67.2 |
| SEBEX | 8DAA | 800 | 32.5 | 542 | 73.8 | 97.0 | 81.4 |
| SEBEX | 16DAA | 800 | 42.5 | 542 | 78.8 | 98.3 | 88.1 |
| SEBEX | 23DAA | 800 | 38.8 | 542 | 65.0 | 96.5 | 79.1 |

Table 2. Improved AAD12 Soybean (GLXMA) Crop Tolerance Results (%Visual Injury) from Combinations of 2,4-D-Choline Salt + Glufosinate-ammonium in Multiple Field Trials at 2 to 7DAA.

| | | 2,4-D-Choline salt | | Glufosinate-ammonium | | Combination | |
|---|---|---|---|---|---|---|---|
| Crop Bayer Code | Evaluation Interval | g ae/ha | Mean % crop injury | g ae/ha | Mean % crop injury | Measured mean % crop injury | Colby predicted mean % crop injury |
| | | | | | | | |
| GLXMA | 2DAA | 2130 | 5.0 | 1084 | 16.7 | 11.7 | 20.8 |
| GLXMA | 2DAA | 2130 | 3.5 | 1084 | 1.5 | 1.5 | 4.9 |
| GLXMA | 3DAA | 2130 | 0.3 | 1084 | 13.8 | 8.3 | 14.0 |
| GLXMA | 3DAA | 1065 | 0.3 | 542 | 5.0 | 3.3 | 5.2 |
| GLXMA | 4DAA | 2130 | 1.0 | 1084 | 23.3 | 16.7 | 24.1 |
| GLXMA | 4DAA | 1065 | 0.0 | 542 | 16.7 | 6.0 | 16.7 |
| GLXMA | 4DAA | 1065 | 0.0 | 542 | 9.3 | 3.0 | 9.3 |
| GLXMA | 6DAA | 2130 | 4.0 | 1084 | 15.0 | 11.3 | 18.4 |
| GLXMA | 6DAA | 1065 | 4.0 | 542 | 10.0 | 7.7 | 13.6 |
| GLXMA | 7DAA | 2130 | 4.0 | 1084 | 28.3 | 16.0 | 31.2 |

(continued)

| | | 2,4-D-Choline salt | | Glufosinate-ammonium | | Combination | |
|---|---|---|---|---|---|---|---|
| Crop Bayer Code | Evaluation Interval | g ae/ha | Mean % crop injury | g ae/ha | Mean % crop injury | Measured mean % crop injury | Colby predicted mean % crop injury |
| GLXMA | 7DAA | 2130 | 13.3 | 822 | 15.0 | 20.0 | 26.3 |

Table 3. Improved AAD12 Soybean (GLXMA) Crop Tolerance Results (%Visual Injury) from Combinations of 2,4-D-Choline Salt + Glufosinate-ammonium in Multiple Field Trials at 9 to 15DAA.

| | | 2,4-D-Choline salt | | Glufosinate-ammonium | | Combination | |
|---|---|---|---|---|---|---|---|
| Crop Bayer Code | Evaluation Interval | g ae/ha | Mean % crop injury | g ae/ha | Mean % crop injury | Measured mean % crop injury | Colby predicted mean % crop injury |
| GLXMA | 9DAA | 2130 | 0.0 | 1084 | 15.0 | 10.0 | 15.0 |
| GLXMA | 9DAA | 1065 | 0.0 | 542 | 10.5 | 3.8 | 10.5 |
| GLXMA | 13DAA | 2130 | 3.3 | 1084 | 10.7 | 6.3 | 13.6 |
| GLXMA | 13DAA | 1065 | 2.0 | 542 | 6.3 | 3.3 | 8.2 |
| GLXMA | 14DAA | 1065 | 3.0 | 542 | 3.5 | 4.5 | 6.4 |
| GLXMA | 14DAA | 1065 | 0.0 | 542 | 2.5 | 1.3 | 2.5 |
| GLXMA | 14DAA | 2130 | 2.3 | 1084 | 25.0 | 8.3 | 26.8 |
| GLXMA | 15DAA | 2130 | 0.0 | 1084 | 8.3 | 1.5 | 8.3 |

Table 4. Improved AAD12 Soybean (GLXMA) Crop Tolerance Results (%Visual Chlorosis) from Combinations of 2,4-D-Choline Salt + Glufosinate-ammonium in Multiple Field Trials at 2 to 4DAA.

| | | 2,4-D-Choline salt | | Glufosinate-ammonium | | Combination | |
|---|---|---|---|---|---|---|---|
| Crop Bayer Code | Evaluation Interval | g ae/ha | Mean % crop chlorosis | g ae/ha | Mean % crop chlorosis | Measured mean % crop chlorosis | Colby predicted mean % crop chlorosis |
| GLXMA | 2DAA | 2130 | 2.3 | 1084 | 12.8 | 9.3 | 14.7 |
| GLXMA | 2DAA | 2130 | 0.0 | 1084 | 18.3 | 6.0 | 18.3 |
| GLXMA | 2DAA | 2130 | 0.0 | 1084 | 9.3 | 4.5 | 9.3 |
| GLXMA | 3DAA | 2130 | 0.0 | 1084 | 13.8 | 5.5 | 13.8 |
| GLXMA | 3DAA | 2130 | 0.0 | 1084 | 15.0 | 3.8 | 15.0 |
| GLXMA | 3DAA | 2130 | 1.3 | 1084 | 23.8 | 7.5 | 24.8 |
| GLXMA | 3DAA | 2130 | 0.0 | 1084 | 12.8 | 7.3 | 12.8 |
| GLXMA | 3DAA | 1065 | 0.0 | 542 | 6.8 | 3.5 | 6.8 |
| GLXMA | 3DAA | 2130 | 0.8 | 1084 | 7.0 | 0.8 | 7.7 |
| GLXMA | 3DAA | 2130 | 0.0 | 1084 | 10.5 | 6.3 | 10.5 |
| GLXMA | 3DAA | 2130 | 0.5 | 1084 | 5.3 | 1.8 | 5.8 |

(continued)

| | | 2,4-D-Choline salt | | Glufosinate-ammonium | | Combination | |
|---|---|---|---|---|---|---|---|
| Crop Bayer Code | Evaluation Interval | g ae/ha | Mean % crop chlorosis | g ae/ha | Mean % crop chlorosis | Measured mean % crop chlorosis | Colby predicted mean % crop chlorosis |
| GLXMA | 4DAA | 2130 | 0.0 | 1084 | 25.0 | 6.0 | 25.0 |
| GLXMA | 4DAA | 1065 | 0.0 | 542 | 10.7 | 3.0 | 10.7 |
| GLXMA | 4DAA | 2130 | 0.0 | 1084 | 20.0 | 11.3 | 20.0 |
| GLXMA | 4DAA | 1065 | 0.0 | 542 | 13.8 | 5.5 | 13.8 |
| GLXMA | 4DAA | 2130 | 0.7 | 822 | 5.7 | 3.7 | 6.3 |
| GLXMA | 4DAA | 2130 | 0.0 | 1084 | 15.3 | 9.0 | 15.3 |
| GLXMA | 4DAA | 1065 | 0.0 | 542 | 7.0 | 5.0 | 7.0 |

Table 5. Improved AAD12 Soybean (GLXMA) Crop Tolerance Results (%Visual Chlorosis) from Combinations of 2,4-D-Choline Salt + Glufosinate-ammonium in Multiple Field Trials at 7 to 9DAA.

| | | 2,4-D-Choline salt | | Glufosinate-ammonium | | Combination | |
|---|---|---|---|---|---|---|---|
| Crop Bayer Code | Evaluation Interval | g ae/ha | Mean % crop chlorosis | g ae/ha | Mean % crop chlorosis | Measured mean % crop chlorosis | Colby predicted mean % crop chlorosis |
| GLXMA | 7DAA | 2130 | 0.0 | 1084 | 10.0 | 0.0 | 10.0 |
| GLXMA | 7DAA | 2130 | 0.0 | 822 | 4.3 | 0.0 | 4.3 |
| GLXMA | 7DAA | 2130 | 0.0 | 1084 | 8.5 | 3.5 | 8.5 |
| GLXMA | 7DAA | 1065 | 0.0 | 542 | 4.0 | 0.8 | 4.0 |
| GLXMA | 7DAA | 2130 | 1.7 | 1084 | 28.3 | 7.7 | 29.6 |
| GLXMA | 7DAA | 1065 | 0.0 | 542 | 11.7 | 3.7 | 11.7 |
| GLXMA | 7DAA | 2130 | 0.0 | 822 | 8.3 | 0.0 | 8.3 |
| GLXMA | 7DAA | 2130 | 1.3 | 822 | 18.3 | 11.7 | 19.4 |
| GLXMA | 7DAA | 2130 | 3.0 | 822 | 18.3 | 11.7 | 20.8 |
| GLXMA | 8DAA | 2130 | 0.0 | 1084 | 6.3 | 3.3 | 6.3 |
| GLXMA | 8DAA | 2130 | 0.0 | 1084 | 11.0 | 5.0 | 11.0 |
| GLXMA | 8DAA | 1065 | 0.0 | 542 | 4.5 | 2.5 | 4.5 |
| GLXMA | 8DAA | 2130 | 0.0 | 1084 | 15.0 | 9.8 | 15.0 |
| GLXMA | 8DAA | 1065 | 0.0 | 542 | 6.0 | 3.8 | 6.0 |
| GLXMA | 9DAA | 2130 | 0.0 | 1084 | 20.0 | 11.3 | 20.0 |
| GLXMA | 9DAA | 1065 | 0.0 | 542 | 15.0 | 5.8 | 15.0 |

Table 6. Improved AAD12 Soybean (GLXMA) Crop Tolerance Results (%Visual Chlorosis) from Combinations of 2,4-D-Choline Salt + Glufosinate-ammonium in Multiple Field Trials at 13 to 15DAA.

| | | 2,4-D-Choline salt | | Glufosinate-ammonium | | Combination | |
|---|---|---|---|---|---|---|---|
| Crop Bayer Code | Evaluation Interval | g ae/ha | Mean % crop chlorosis | g ae/ha | Mean % crop chlorosis | Measured mean % crop chlorosis | Colby predicted mean % crop chlorosis |
| GLXMA | 13DAA | 2130 | 0.0 | 1084 | 1.3 | 0.3 | 1.3 |
| GLXMA | 13DAA | 2130 | 0.0 | 1084 | 10.7 | 5.0 | 10.7 |
| GLXMA | 13DAA | 1065 | 0.0 | 542 | 6.3 | 1.7 | 6.3 |
| GLXMA | 14DAA | 2130 | 0.0 | 1084 | 1.5 | 0.0 | 1.5 |
| GLXMA | 14DAA | 2130 | 0.0 | 822 | 1.7 | 0.0 | 1.7 |
| GLXMA | 14DAA | 2130 | 0.0 | 1084 | 6.0 | 2.8 | 6.0 |
| GLXMA | 14DAA | 2130 | 0.8 | 1084 | 9.0 | 4.5 | 9.7 |
| GLXMA | 14DAA | 1065 | 0.0 | 542 | 1.8 | 0.8 | 1.8 |
| GLXMA | 14DAA | 2130 | 1.3 | 1084 | 14.0 | 3.7 | 15.2 |
| GLXMA | 15DAA | 2130 | 0.0 | 1084 | 7.0 | 0.0 | 7.0 |
| GLXMA | 15DAA | 2130 | 0.0 | 1084 | 8.8 | 0.0 | 8.8 |

Table 7. Improved AAD12 Soybean (GLXMA) Crop Tolerance Results (%Growth Inhibition) from Combinations of 2,4-D-Choline Salt + Glufosinate-ammonium in Multiple Field Trials at 7 to 15DAA.

| | | 2,4-D-Choline salt | | Glufosinate-ammonium | | Combination | |
|---|---|---|---|---|---|---|---|
| Crop Bayer Code | Evaluation Interval | g ae/ha | Mean % crop growth inhibition | g ae/ha | Mean % crop growth inhibition | Measured mean % crop chlorosis | Colby predicted mean % crop growth inhibition |
| GLXMA | 7DAA | 2130 | 1 | 1084 | 14.0 | 6.7 | 14.9 |
| GLXMA | 14DAA | 2130 | 0 | 1084 | 23.3 | 0.0 | 23.3 |
| GLXMA | 14DAA | 2130 | 0 | 1084 | 3.0 | 0.0 | 3.0 |
| GLXMA | 15DAA | 2130 | 0 | 1084 | 9.8 | 0.0 | 9.8 |

The following abbreviations are used in the tables above:

2,4-D-choline = choline salt of 2,4-dichlorophenoxyacetic acid glufosinate-ammonium = ammonium salt of 2-amino-4-(hydroxymethylphosphinyl)butanoic acid
AMAPA = *Amaranthus palmeri* S. Wats. (Palmer amaranth)
ERICA = *Conyza canadensis* (L.) Cronq. (horseweed)
SASKR = *Salsola tragus* L. (Russian thistle)
SEBEX = *Sesbania exaltata* (Raf.) Cory/Rydb. Ex Hill (hemp sesbania)
GLXMA = *Glycine max* L. (soybean)
g ae/ha = grams acid equivalent per hectare
DAA = Days After Application

## Claims

1. A composition for controlling undesirable vegetation, comprising a mixture comprising a synergistic, herbicidally effective amount of:

   (a) a choline salt of 2,4-dichlorophenoxyacetic acid (2,4-D-choline)

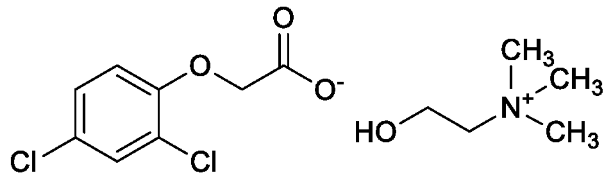

   and
   (b) an ammonium salt of 2-amino-4-(hydroxymethylphosphinyl)butanoic acid (glufosinate)

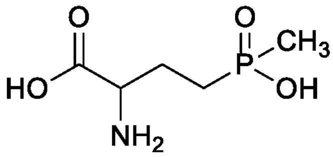

,

   wherein the weight ratio of (a) to (b) is from 1:1 to 4:1.

2. The composition of claim 1, wherein the weight ratio of (a) to (b) is from 1:1 to 2:1.

3. The composition of claim 1 or claim 2, further comprising a herbicidally effective amount of an additional herbicide and/or an agriculturally acceptable adjuvant.

4. A method of controlling undesirable vegetation comprising contacting undesirable vegetation or the locus thereof, or foliage, water or soil, with the composition of any of claims 1-3, wherein the undesirable vegetation comprises *Conyza canadensis* (L.) Cronq. (horseweed, ERICA), *Salsola tragus* L. (Russian thistle, SASKR) and *Sesbania exaltata* (RAF.) Cory/Rydb. Ex Hill (hemp sesbania, SEBEX).

5. The method of claim 4, wherein the composition is applied pre-emergence or post-emergence to the undesirable vegetation or wherein the undesirable vegetation is contacted prior to planting a crop.

6. The method of any of claims 4-5, wherein (a) and (b) are applied simultaneously or sequentially.

7. The method of any of claims 4-6, wherein synergy is determined by the Colby equation.

8. The method of any of claims 4-7, wherein the undesirable vegetation comprises a herbicide resistant or tolerant weed, preferably wherein the resistant or tolerant weed is a biotype with resistance or tolerance to single or multiple herbicides or single or multiple chemical classes, or inhibitors of single or multiple herbicide modes-of-action and/or the resistant or tolerant weed is a biotype resistant or tolerant to acetolactate synthase (ALS) or acetohydroxy acid synthase (AHAS) inhibitors, photosystem II inhibitors, acetyl CoA carboxylase (ACCase) inhibitors, photosystem I inhibitors, 5-enolpyruvyl-shikimate-3-phosphate (EPSP) synthase inhibitors, microtubule assembly inhibitors, lipid synthesis inhibitors, protoporphyrinogen oxidase (PPO) inhibitors, carotenoid biosynthesis inhibitors, very long chain fatty acid (VLCFA) inhibitors, phytoene desaturase (PDS) inhibitors, glutamine synthetase inhibitors, 4-hydroxyphenyl-pyruvate-dioxygenase (HPPD) inhibitors, mitosis inhibitors, cellulose biosynthesis inhibitors, herbicides with multiple modes-of-action, quinclorac, arylaminopropionic acids, difenzoquat, endothall or organoarsenicals.

9. The method of any of claims 4-8, further comprising contacting the undesirable vegetation with a herbicidally effective amount of an additional herbicide.

10. The method of any of claims 4-9, wherein the undesirable vegetation is controlled in a non-crop, perennial crop,

fruiting crop, or plantation crop area, comprising contacting undesirable vegetation or the locus thereof, or foliage, water or soil, in a non-crop, perennial crop, fruiting crop, or plantation crop area.

**11.** The method of claim 10, wherein the undesirable vegetation is in a non-crop area and the non-crop area is a pasture, grassland, rangeland, fallowland, fencerow, parking area, tank farm, storage area, rights-of-way, utility area, turf, forestry, aquatics, industrial vegetation management (IVM) or fallow-bed.

**12.** The method of claim 10, wherein the undesirable vegetation is in a perennial crop area and the foliage of the perennial crop is not contacted when the undesirable vegetation is contacted, preferably wherein the perennial crop is a tree and vine orchard, more preferably wherein the tree and vine orchard is selected from citrus, grapes, almond, apple, apricot, avocado, beechnut, Brazil nut, butternut, cashew, cherry, chestnut, chinquapin, crab apple, date, feijoa, fig, filbert, hickory nut, kiwi, lemon, lime, loquat, macadamia nut, mandarin, mayhaws, nectarine, olives, orange, peach, pear, pecan, persimmon, pistachio, plum, pome fruit, pomegranates, prune, quince, stone fruit, tree nuts and walnut.

**13.** The method of claim 10, wherein the undesirable vegetation is in a fruiting crop area and the foliage of the fruiting crop is not contacted when the undesirable vegetation is contacted, preferably wherein the fruiting crop is selected from blueberries, guava, papaya, strawberries, taro, blackberries and raspberries.

**14.** The method of claim 10, wherein the undesirable vegetation is in a plantation crop area and the foliage of the plantation crop is not contacted when the undesirable vegetation is contacted, preferably wherein the plantation crop is selected from coffee, cacao, rubber and palm oil.

**Patentansprüche**

**1.** Eine Zusammensetzung zur Bekämpfung unerwünschter Vegetation umfassend eine Mischung umfassend eine synergistische, herbizid wirksame Menge von:

(a) einem Cholinsalz von 2,4-Dichlorphenoxyessigsäure (2,4-D-Cholin)

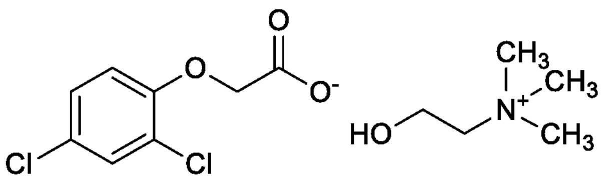

und

(b) einem Ammoniumsalz von 2-Amino-4-(hydroxymethylphosphinyl)-buttersäure (Glufosinat)

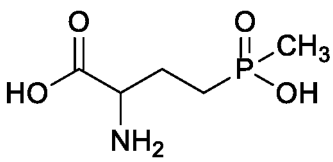

,

wobei das Gewichtsverhältnis von (a) zu (b) von 1:1 bis 4:1 beträgt.

**2.** Die Zusammensetzung gemäß Anspruch 1, wobei das Gewichtsverhältnis von (a) zu (b) von 1:1 bis 2:1 beträgt.

**3.** Die Zusammensetzung gemäß Anspruch 1 oder Anspruch 2, des Weiteren umfassend eine herbizid wirksame Menge eines zusätzlichen Herbizids und/oder einen landwirtschaftlich akzeptablen Hilfsstoff.

**4.** Ein Verfahren zur Bekämpfung unerwünschter Vegetation, umfassend das In-Kontakt-Bringen der unerwünschten Vegetation oder ihres Ortes oder des Blattwerks, Wassers oder Bodens mit der Zusammensetzung gemäß einem der Ansprüche 1-3, wobei die unerwünschte Vegetation *Conyza canadensis* (L.) Cronq. (Kanadisches Berufkraut, ERICA), *Salsola tragus* L. (Ruthenisches Salzkraut, SASKR) und *Sesbania exaltata* (RAF.) Cory/Rydb. Ex Hill

(Hanfsesbanie, SEBEX) umfasst.

5. Das Verfahren gemäß Anspruch 4, wobei die Zusammensetzung im Vorauflauf oder Nachauflauf auf die unerwünschte Vegetation angewandt wird oder wobei die unerwünschte Vegetation vor dem Pflanzen einer Nutzpflanze kontaktiert wird.

6. Das Verfahren gemäß einem der Ansprüche 4-5, wobei (a) und (b) gleichzeitig oder nacheinander angewandt werden.

7. Das Verfahren gemäß einem der Ansprüche 4-6, wobei Synergie durch die Gleichung von Colby bestimmt wird.

8. Das Verfahren gemäß einem der Ansprüche 4-7, wobei die unerwünschte Vegetation ein herbizidresistentes oder -tolerantes Unkraut umfasst, wobei das resistente oder tolerante Unkraut vorzugsweise ein Biotyp mit Resistenz oder Toleranz gegenüber einzelnen oder mehreren Herbiziden oder einzelnen oder mehreren chemischen Klassen oder Hemmern einzelner oder mehrerer herbizider Wirkweisen ist und/oder das resistente oder tolerante Unkraut ein Biotyp ist, der resistent oder tolerant gegenüber Acetolactatsynthase-(ALS)- oder Acetohydroxysäuresynthase-(AHAS)-Hemmern, Photosystem-II-Hemmern, Acetyl-CoA-Carboxylase-(ACCase)-Hemmern, Photosystem-I-Hemmern, 5-Enolpyruvylshikimat-3-phosphat-(EPSP)-Synthase-Hemmern, Mikrotubuli-Organisations-Hemmern, Lipidsynthese-Hemmern, Protoporphyrinogenoxidase-(PPO)-Hemmern, Hemmern der Carotenoid-Biosynthese, Hemmern der Synthese sehr langkettiger Fettsäuren (VLCFA), Phytoendesaturase-(PDS)-Hemmern, Glutaminsynthetase-Hemmern, 4-Hydroxyphenylpyruvatdioxygenase-(HPPD)-Hemmern, Mitose-Hemmern, Hemmern der Biosynthese von Cellulose, Herbiziden mit mehreren Wirkweisen, Quinclorac, Arylaminopropionsäuren, Difenzoquat, Endothal oder Organoarsenverbindungen ist.

9. Das Verfahren gemäß einem der Ansprüche 4-8, des Weiteren umfassend das In-Kontakt-Bringen der unerwünschten Vegetation mit einer herbizid wirksamen Menge eines zusätzlichen Herbizids.

10. Das Verfahren gemäß einem der Ansprüche 4-9, wobei die unerwünschte Vegetation auf einer Fläche ohne Nutzpflanzen, mit mehrjährigen Nutzpflanzen, Obstpflanzen oder Plantagenkulturen bekämpft wird, umfassend das In-Kontakt-Bringen der unerwünschten Vegetation oder ihres Ortes oder des Blattwerks, Wassers oder Bodens in einer Fläche ohne Nutzpflanzen, mit mehrjährigen Nutzpflanzen, Obstpflanzen oder Plantagenkulturen.

11. Das Verfahren gemäß Anspruch 10, wobei sich die unerwünschte Vegetation auf einer Fläche ohne Nutzpflanzen befindet und die Fläche ohne Nutzpflanzen ein(e) Wiese, Grasland, Weidefläche, Brachland, Zaunstreifen, Parkplatz, Tanklager, Lagerfläche, entlang von Verkehrswegen, Nutzfläche, Rasen, Forstwirtschaft, Wasserbereiche, im industriellen Vegetationsmanagement (IVM) oder Brachbeet ist.

12. Das Verfahren gemäß Anspruch 10, wobei sich die unerwünschte Vegetation auf einer Fläche mehrjähriger Nutzpflanzen befindet und das Blattwerk der mehrjährigen Nutzpflanze nicht in Kontakt gebracht wird, wenn die unerwünschte Vegetation in Kontakt gebracht wird, wobei die mehrjährige Nutzpflanze vorzugsweise eine Baumschule und ein Weingarten ist, wobei die Baumschule und der Weingarten bevorzugter aus Zitrusgewächs, Weintrauben, Mandel, Apfel, Aprikose, Avocado, Buchecker, Paranuss, Butternuss, Cashewnuss, Kirsche, Kastanie, Gelbe Eiche, Holzapfel, Dattel, Feijoa, Feige, Haselnuss, Hickorynuss, Kiwi, Zitrone, Limette, Japanische Wollmispel, Macadamianuss, Mandarine, Weißdorn, Nektarine, Oliven, Orange, Pfirsich, Birne, Pekannuss, Kaki, Pistazie, Pflaume, Kernobst, Granatapfel, Zwetschge, Quitte, Steinobst, Schalenfrüchten und Walnuss ausgewählt ist.

13. Das Verfahren gemäß Anspruch 10, wobei sich die unerwünschte Vegetation auf einer Fläche mit Obstpflanzen befindet und das Blattwerk der Obstpflanze nicht in Kontakt gebracht wird, wenn die unerwünschte Vegetation in Kontakt gebracht wird, wobei die Obstpflanze vorzugsweise aus Heidelbeeren, Guave, Papaya, Erdbeeren, Taro, Brombeeren und Himbeeren ausgewählt ist.

14. Das Verfahren des Anspruchs 10, wobei sich die unerwünschte Vegetation auf einer Fläche einer Plantagenkultur befindet, und das Blattwerk der Plantagenkultur nicht in Kontakt gebracht wird, wenn die unerwünschte Vegetation in Kontakt gebracht wird, wobei die Plantagenkultur vorzugsweise aus Kaffee, Kakao, Kautschuk und Palmöl ausgewählt ist.

## Revendications

1. Composition pour lutter contre des végétaux indésirables, qui comprend un mélange comprenant, en quantités à effet herbicide synergique,

   a) du sel de choline de l'acide 2,4-dichloro-phénoxy-acétique (2,4D-choline)

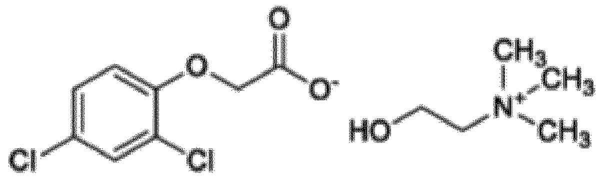

   b) et du sel d'ammonium de l'acide 2-amino-4-(hydroxy-méthyl-phosphinyl)-butanoïque (glufosinate)

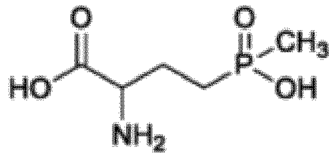

,

   et dans laquelle composition le rapport pondéral du constituant (a) au constituant (b) vaut de 1/1 à 4/1.

2. Composition conforme à la revendication 1, dans laquelle le rapport pondéral du constituant (a) au constituant (b) vaut de 1/1 à 2/1.

3. Composition conforme à la revendication 1 ou 2, qui comprend en outre un herbicide supplémentaire, en une quantité à effet herbicide, et/ou un adjuvant admissible en agriculture.

4. Procédé de lutte contre des végétaux indésirables, qui comprend le fait de mettre ces végétaux indésirables ou l'endroit où ils poussent, ou leur feuillage, l'eau ou le sol, en contact avec une composition conforme à l'une des revendications 1 à 3, lesquels végétaux indésirables englobent Conyza canadensis (L.) Cronq. (vergerette du Canada, ERICA), Salsola tragus L. (soude-bouc, SASKR) et Sesbania exaltata (Raf.) Cory/Rydb. Ex Hill (chanvre du Colorado, SEBEX).

5. Procédé conforme à la revendication 4, dans lequel la composition est appliquée avant ou après levée sur les végétaux indésirables, ou dans lequel les végétaux indésirables sont mis en contact avec la composition avant la plantation d'une culture.

6. Procédé conforme à la revendication 4 ou 5, dans lequel les constituants (a) et (b) sont appliqués simultanément ou successivement.

7. Procédé conforme à l'une des revendications 4 à 6, dans lequel l'effet de synergie est déterminé au moyen de l'équation de Colby.

8. Procédé conforme à l'une des revendications 4 à 7, dans lequel les végétaux indésirables comprennent une mauvaise herbe résistante ou tolérante vis-à-vis d'un herbicide, et de préférence, cette mauvaise herbe résistante ou tolérante vis-à-vis d'un herbicide est un biotype doté d'une résistance ou d'une tolérance vis-à-vis d'un seul ou de plusieurs herbicide(s) d'une seule ou de plusieurs classe(s) chimique(s), ou doté d'inhibiteurs d'un seul ou de plusieurs mode(s) d'action d'herbicide, et/ou la mauvaise herbe résistante ou tolérante est un biotype résistant ou tolérant vis-à-vis d'inhibiteurs de l'acéto-lactate synthétase (ALS) ou de l'acéto-hydroxy-acide synthétase (AHAS), d'inhibiteurs du photosystème II, d'inhibiteurs de l'acétyl-CoA carboxylase (ACCase), d'inhibiteurs du photosystème I, d'inhibiteurs de la 5-énol-pyruvyl-shikimate-3-phosphate (EPSP) synthétase, d'inhibiteurs de l'assemblage des microtubules, d'inhibiteurs de la synthèse de lipides, d'inhibiteurs de la protoporphyrinogène oxydase (PPO), d'inhibiteurs de la biosynthèse des caroténoïdes, d'inhibiteurs des acides gras à très longue chaîne (VLCFA), d'inhibiteurs de la phytoène désaturase (PDS), d'inhibiteurs de la glutamine synthétase, d'inhibiteurs de la 4-hydroxy-phényl-pyruvate dioxygénase (HPPD), d'inhibiteurs de la mitose, d'inhibiteurs de la biosynthèse de la cellulose, d'herbicides à multiples modes d'action, du quinclorac, des acides aryl-amino-propioniques, du difenzoquat, de l'endothal ou des organo-arséniés.

**9.** Procédé conforme à l'une des revendications 4 à 8, qui comprend en outre le fait de mettre en contact les végétaux indésirables avec un herbicide supplémentaire, utilisé en une quantité à effet herbicide.

**10.** Procédé conforme à l'une des revendications 4 à 9, par lequel on lutte contre des végétaux indésirables dans une zone non-cultivée, ou dans une zone de culture pérenne, de culture fruitière ou de culture de rapport, ce qui comporte le fait de mettre en contact ces végétaux indésirables ou l'endroit où ils poussent, ou leur feuillage, l'eau ou le sol, dans une zone non-cultivée, ou dans une zone de culture pérenne, de culture fruitière ou de culture de rapport.

**11.** Procédé conforme à la revendication 10, dans lequel les végétaux indésirables se trouvent dans une zone non-cultivée, laquelle zone non-cultivée est un pâturage, un herbage, une aire de parcours, une terre en jachère, une haie-clôture, une aire de parking, un parc de réservoirs, une aire de stockage, un passage, une aire de service, une pelouse, une zone forestière, un bassin, une zone de gestion intégrée de la végétation (IVM) ou une aire laissée en jachère.

**12.** Procédé conforme à la revendication 10, dans lequel les végétaux indésirables se trouvent dans une zone de culture pérenne et le feuillage de la culture pérenne n'est pas mis en contact quand le sont les végétaux indésirables, laquelle culture pérenne est de préférence une plantation d'arbres ou de vigne, laquelle plantation d'arbres ou de vigne, mieux encore, est choisie parmi celles donnant les fruits suivants : citrus, raisins, amandes, pommes, abricots, avocats, faînes, noix du Brésil, doubeurres « butternut », noix de cajou, cerises, châtaignes, châtaignes de chrysolepsis « chinquapin », pommes décoratives, dattes, goyaves feijoa, figues, noisettes, noix de pécan, kiwis, citrons, citrons verts, nèfles, noix de macadamia, mandarines, cenelles (fruits d'aubépine), nectarines, olives, oranges, pêches, poires, pacanes, kakis, pistaches, prunes, fruits à pépins, grenades, pruneaux, coings, fruits à noyaux, noix et fruits à amande.

**13.** Procédé conforme à la revendication 10, dans lequel les végétaux indésirables se trouvent dans une zone de culture fruitière et le feuillage de la culture fruitière n'est pas mis en contact quand le sont les végétaux indésirables, laquelle culture fruitière est de préférence choisie parmi celles donnant les fruits suivants : myrtilles, goyaves, papayes, fraises, mûres sauvages et framboises, et celles donnant des taros.

**14.** Procédé conforme à la revendication 10, dans lequel les végétaux indésirables se trouvent dans une zone de culture de rapport et le feuillage de la culture de rapport n'est pas mis en contact quand le sont les végétaux indésirables, laquelle culture de rapport est choisie de préférence parmi celles donnant du café, du cacao, du caoutchouc ou de l'huile de palme.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 61914177
- US 61914195 B
- US 8283522 B2
- US 7838733 B2
- US 8278505 B2
- US 6153401 A
- CN 103060279
- US 5587903 A
- US 5561236 A
- WO 2008070845 A
- WO 2011133482 A
- US 2013252812 A


### Non-patent literature cited in the description


- **R. MERCHANT et al.** describe the control of glufosinate tolerant cotton with a combination of 2,4-D and glufosinate. *The Journal of Cotton Science,* 2013, vol. 17, 212
- Herbicide Handbook. Lawrence: Weed Science Society of America, 2014
- **COLBY, S. R.** Calculation of the synergistic and antagonistic response of herbicide combinations. *Weeds,* 1967, vol. 15, 20-22
- McCutcheon's Detergents and Emulsifiers Annual. MC Publishing Corporation, 1998
- Encyclopedia of Surfactants. Chemical Publishing Company, 1980, vol. I-III, 81